# EUROPÄISCHE PATENTSCHRIFT

(11) **EP 2 002 088 B1**
(45) Veröffentlichungstag und Bekanntmachung des Hinweises auf die Patenterteilung: **23.12.2009**
(21) Anmeldenummer: 07726543.7
(22) Anmeldetag: 28.02.2007
(51) Int. Cl.: F01D 17/14, F01D 25/10

(54) **GASTURBINE FÜR EIN THERMISCHES KRAFTWERK UND VERFAHREN ZUM BETREIBEN EINER DERARTIGEN GASTURBINE**
GAS TURBINE FOR A THERMAL POWER PLANT, AND METHOD FOR THE OPERATION OF SUCH A GAS TURBINE
TURBINE À GAZ POUR CENTRALE THERMIQUE,, ET PROCÉDÉ PERMETTANT DE FAIRE FONCTIONNER UNE TELLE TURBINE À GAZ

(30) Priorität: 15.03.2006 EP 06005331
(43) Veröffentlichungstag der Anmeldung: 17.12.2008
(73) Patentinhaber: SIEMENS AKTIENGESELLSCHAFT, 80333 München (DE)
(72) Erfinder: CERIC, Hajrudin, 46045 Oberhausen (DE); DAHLKE, Stefan, 45481 Mülheim A.d. Ruhr (DE); GRUSCHKA, Uwe, 41564 Kaarst (DE); HEUE, Matthias, 44879 Bochum (DE); LENZE, Martin, 45359 Essen (DE); MATERN, Thomas, 46145 Oberhausen (DE); MINNINGER, Dieter, 46535 Dinslaken (DE); SCHABERG, Axel, 59302 Oelde (DE); SCHMIDT, Stephan, 45133 Essen (DE); SKREBA, Steffen, 91077 Neunkirchen am Brand (DE); STÖCKER, Bernd, 46147 Oberhausen (DE); VOSBERG, Volker, 45476 Mülheim An Der Ruhr (DE); WALDINGER, Roger, 45479 Mülheim An Der Ruhr (DE)
(86) Internationale Anmeldenummer: PCT/EP2007/051907
(87) Internationale Veröffentlichungsnummer: WO 2007/104647

(56) Entgegenhaltungen:
- EP-A- 1 647 673
- EP-A1- 0 508 067
- GB-A- 1 171 495

## Beschreibung

Die Erfindung betrifft eine Gasturbine für ein thermisches Kraftwerk mit einem drehbaren Rotor sowie einem Strömungskanal, welcher von einem Gas durchströmbar ist und in dem Turbinenschaufeln zum Antreiben des Rotors angeordnet sind. Die Erfindung betrifft ferner ein Verfahren zum Betreiben einer derartigen Gasturbine, bei dem die Gasturbine nach Beendigung eines Lastbetriebs, in dem ein Rotor der Gasturbine von einem Gas über einen Turbinenschaufelabschnitt der Gasturbine angetrieben wird, in einen abgeschalteten Betriebszustand übergeht, in dem der Rotor nicht mehr von dem Gas angetrieben wird. Eine Gasturbine für ein thermisches Kraftwerk unterscheidet sich von einer Dampfturbine für ein derartiges Kraftwerk unter anderem dadurch, dass in der Gasturbine die Gase in Form von Luft zunächst mittels einer Verdichterstufe verdichtet werden.

Eine gattungsgemäße Turbine ist beispielsweise aus der GB 1 171 495 A bekannt. Die Turbine ist dabei mit einem zur Rotordrehachse radial verschiebbarem Schott im Bereich der Turbinenbeschaufelung ausgestattet, um den Durchfluss des Massenstroms des Arbeitsmediums beim Betrieb der Turbine einzustellen. Eine zum gleichen Zweck verwendete Vorrichtung ist aus der DE 1 647 673 A bekannt. Hier weist ein in den axial geteilten Leitschaufeln eines Kranzes angeordneter Ring eine zur Anzahl der Leitschaufeln entsprechende Anzahl von Öffnungen auf. Dieser Ring ist relativ zu den feststehenden Leitschaufeln in Umfangsrichtung verschiebbar, um durch einen veränderlichen Überlapp von Öffnungen des Rings und den Freiräumen zwischen den Leitschaufeln einen veränderbaren Strömungsquerschnitt für das Arbeitsgas bereitzustellen. Weiterhin zeigt EP 0 508 067 eine Dampfturbine in deren Strömungskanal eine Sperreinrichtung ist, welche in einer Schliessstellung den Einströmabschnitt zumindest teilweise verschliesst.

Die vorgenannten Gasturbinen werden beim Betrieb des thermischen Kraftwerks flexibel zu- bzw. abgeschaltet. Beim "Hochfahren" der Gasturbine vom abgeschalteten Betriebszustand in den Lastbetrieb darf ein bestimmter Lastgradient allerdings nicht überschritten werden, um allen Bauteilen genügend Zeit zu lassen, sich im Zusammenspiel mit den anderen Bauteilen entsprechend aufzuheizen. Damit werden unzulässig hohe Spannungen zwischen den Bauteilen, die zu Bauteilversagen führen würden, vermieden. Das heißt, der Zeitraum, der zum Hochfahren der Gasturbine in den Lastbetrieb benötigt wird, muss ausreichend groß gewählt werden, um ausreichend Zeit zur Durchwärmung innerhalb der jeweils zulässigen Spannungszustände zu lassen und damit keine Beschädigungen an der Gasturbine zu verursachen.

Eine der Erfindung zugrundeliegende Aufgabe besteht darin, eine Gasturbine der eingangs genannten Art sowie ein Verfahren der eingangs genannten Art dahingehend zu verbessern, dass die Gasturbine schneller aus dem abgeschalteten Betriebszustand in den Lastbetrieb ohne einer erhöhten Gefahr eines Bauteilversagens hochgefahren werden kann.

Diese Aufgabe ist erfindungsgemäß mit einer gattungsgemäßen Gasturbine gelöst, welche den Merkmalen des Anspruchs 1 entspricht. Die Aufgabe ist erfindungsgemäß ferner mit dem gattungsgemäßen Verfahren gemäß den Merkmalen des Anspruchs 6 gelöst.

Die Gasturbine weist einen Einströmabschnitt zum Einströmen des Gases in die Gasturbine und einen Abströmabschnitt auf, durch welchen das Gas nach Durchströmen des Bereichs mit den Turbinenschaufeln aus der Gasturbine abführbar ist, wobei die Sperreinrichtung resp. die Sperreinrichtungen in der Schließstellung den Einströmabschnitt und/oder den Abströmabschnitt zumindest teilweise verschließt resp. verschließen. Im Lastbetrieb der Gasturbine wird das Gas von dem Einströmabschnitt in Form von Luft angesaugt. Weiterhin wird das Gas von dem Abströmabschnitt in Form eines beim Verbrennen eines Brennstoffs erzeugten Abgases abgeführt. Der Einströmabschnitt weist insbesondere ein Ansaughaus auf, während der Abströmabschnitt einen Abgaskanal der Gasturbine umfasst.

Durch das erfindungsgemäße Vorsehen der Sperreinrichtung, welche in der Schließstellung den Einströmabschnitt und/oder den Abströmabschnitt zumindest teilweise verschließt, wird zumindest teilweise verhindert, dass sich im Anschluss an den Lastbetrieb durch den Strömungskanal eine Konvektionsströmung einstellt, welche die Bauteile der Gasturbine abkühlen würde. Damit können erfindungsgemäß die Bauteile der Gasturbine nach vorangegangenem Lastbetrieb möglichst lange warm gehalten werden. Dies ermöglicht, die Gasturbine nach einer begrenzten Ruhephase der Gasturbine in kurzer Zeit wieder in den Lastbetrieb hochzufahren. Durch das Verhindern übermäßiger Abkühlung der Bauteile der Gasturbine kann die zu überbrückende Temperaturdifferenz gering gehalten und damit der zum spannungsfreien Aufheizen der Turbinenbauteile auf Betriebstemperatur benötigte Zeitraum verringert werden.

Durch die erfindungsgemäße Maßnahme wird insbesondere verhindert, dass sich bei einem im abgeschalteten Betriebszustand der Gasturbine ausgeführten Turnbetrieb der Gasturbine ein kühlender Luftzug bildet. Beim Turnbetrieb der Gasturbine wird ein Rotor zum Verhindern eines Verklemmens des Rotors mittels eines Hilfsmotors mit einer geringen Drehzahl angetrieben. Die durch diese Drehung erzeugte Luftbewegung führt bei herkömmlichen Ausführungen einer gattungsgemäßen Gasturbine für ein thermisches Kraftwerk dazu, dass die Gasturbine im Bereich des Strömungskanals sowie in darunter liegenden Bereichen gekühlt wird. Durch das erfindungsgemäße Vorsehen einer Sperreinrichtung wird verhindert, dass sich eine derartige Konvektionskühlung ausbildet.

Es ist sogar besonders zweckmäßig, wenn mittels der Schließvorrichtung ein Strömungsquerschnitt des Einströmabschnitts bzw. des Abströmabschnitts wesentlich verengbar ist, insbesondere vollständig verschlossen werden kann. Dies verhindert das Abströmen des restlichen, aufgrund des vorangegangenen Lastbetriebes noch warmen Gases aus der Gasturbine, was wiederum das Auskühlen der Gasturbine insgesamt weiter verzögert.

Weiterhin kann sogar die mechanische Turnenergie in Wärmeenergie umgewandelt werden, sodass die Gasturbine im abgeschalteten Zustand noch weniger abkühlt oder sogar ihre Temperatur hält. Weiterhin kann durch die Umwandlung der mechanischen Turnenergie in Wärmeenergie auch bewirkt werden, dass die Bauteile der Gasturbine bei Inbetriebnahme der Gasturbine vorgewärmt werden. Damit kann die Gasturbine auch nach längeren Stillständen aufgrund dieser Vorwärmung schnell hochgefahren werden. Indem die Bauteile der erfindungsgemäßen Gasturbine auf einem höheren homogenen Temperaturniveau verbleiben, treten beim nächsten Hochfahren weniger Spannungen auf. Dieses geringere Spannungsniveau ermöglicht dann wiederum das Einstellen eines höheren Lastgradienten unter Ausnutzung der maximal zulässigen Spannungen innerhalb der Bauteile. Vorteilhafterweise kann die Sperreinrichtung auch im abgeschalteten Betriebszustand in einer geöffneten Stellung angeordnet werden. In diesem Fall kühlt die Gasturbine so schnell wie möglich ab. Diese Funktion kann zum Beispiel im Rahmen einer Inspektion wichtig sein. Ein weiterer Nutzen der erfindungsgemäßen Gasturbine besteht darin, dass ein kühlender Luftzug durch einen der Gasturbine nachgeschalteten Kessel minimiert wird. Somit wird auch eine ungewollte Abkühlung des Kessels reduziert.

Vorteilhafterweise verhindert die Sperreinrichtung in der Schließstellung zumindest teilweise, dass das Gas den Strömungskanal im Bereich der Turbinenschaufeln durchströmt. Damit wird ein übermäßiges Abkühlen der im Bereich der Turbinenschaufel, in dem während des Lastbetriebes besonders große Temperaturen herrschen, angeordneten Bauteile und insbesondere der Turbinenschaufeln verhindert.

Besonders wirksam kann das Strömen des Gases durch den Turbinenschaufelabschnitt verhindert werden, wenn die Sperreinrichtung ein in dem Einströmabschnitt angeordnetes erstes Sperrelement und/oder ein in dem Abströmabschnitt angeordnetes zweites Sperrelement aufweist. Die Sperrelemente können insbesondere in Form von Blechen, Klappen, insbesondere den schwenkbaren Klappen, oder sonstigen Schotten vorgesehen sein. Besonders einfach lassen sich entsprechende Querschnitte mittels einer schwenkbaren Schließklappe verschließen.

In weiterhin vorteilhafter Ausführungsform weist die Gasturbine eine stromabwärtsseitig bezüglich des Einströmabschnitts angeordnete Brennkammer auf, in der das Gas aus einer sauerstoffreichen Form in eine abgasreiche Form umsetzbar ist, wobei der Strömungskanal durch die Brennkammer verläuft. Insbesondere liegt das Gas stromaufwärtsseitig der Brennkammer als Luft vor, der Brennstoff zugesetzt wird. Dieser wird daraufhin in der Brennkammer verbrannt und das entstehende Abgas durch den Schaufelabschnitt der Gasturbine zum Antrieb des Rotors über Turbinenschaufeln geleitet. Wird im Anschluss an den Lastbetrieb nun ein stromaufwärtsseitig bezüglich der Brennkammer angeordneter Einströmabschnitt mittels der Sperreinrichtung zumindest teilweise verschlossen, so wird sowohl die Abkühlung der Brennkammer als auch des Schaufelabschnitts der Gasturbine verhindert, was eine entsprechende Verbesserung im Startverhalten der Gasturbine aus dem abgeschalteten Zustand bewirkt.

Darüber hinaus ist es vorteilhaft, wenn die Gasturbine einen stromabwärtsseitig bezüglich des Einströmabschnitts angeordneten und der Brennkammer vorgeschalteten Verdichter zum Verdichten des Gases mittels Verdichterschaufeln aufweist, wobei der Strömungskanal durch den Verdichter verläuft. Wird nun der derart angeordnete Einströmabschnitt mittels der Sperreinrichtung zumindest teilweise verschlossen, so wird auch eine Konvektionsabkühlung des Verdichters weitgehend verhindert, wodurch ein Bauteilversagen bei schnellem Übergang zwischen dem abgeschalteten Betriebszustand in den Lastbetrieb mit größerer Sicherheit verhindert werden kann.

Eine vorteilhafte Ausführungsform des erfindungsgemäßen Verfahrens ist dadurch gekennzeichnet, dass die Durchströmung des Turbinenschaufelabschnittes durch ein zumindest teilweises Verschließen eines Einströmabschnitts der Gasturbine, durch welchen das Gas im Lastbetrieb in die Gasturbine einströmt, und/oder eines Abströmabschnittes, durch welchen das Gas im Lastbetrieb die Gasturbine verlässt, zumindest teilweise verhindert wird. Bei einem zumindest teilweisen Verschließen sowohl des Einströmabschnitts als auch des Abströmabschnitts kann ein Abkühlen der im Gasturbineninneren angeordneten Bauteile besonders wirkungsvoll verhindert werden.

Darüber hinaus ist es vorteilhaft, wenn im abgeschalteten Betriebszustand der Gasturbine der Rotor im Rahmen eines Turnbetriebs mit einer ein Verklemmen des Rotors verhindernden geringen Drehzahl angetrieben wird. Wie vorstehend bereits erwähnt, ist es vorteilhaft, wenn der Rotor im Rahmen des Turnbetriebs mit einer geringen Drehzahl von beispielsweise etwa 2 Hz, d. h. 2 Umdrehungen pro Sekunde, mittels eines Hilfsmotors angetrieben wird. Durch das Vorsehen der erfindungsgemäßen Sperreinrichtung wird die durch den Turnbetrieb erzeugte Luftströmung innerhalb der Gasturbine gehalten, wodurch die mechanische Turnenergie aufgrund der von den Laufschaufeln erzeugten Reibung an der "stehenden" Luft in Wärmeenergie umgewandelt werden kann und so die Bauteile der Gasturbine im abgeschalteten Betriebszustand der Gasturbine auf einer möglichst hohen Temperatur gehalten werden können. Damit kann die Gasturbine innerhalb kürzester Zeit aus dem abgeschalteten Betriebszustand wieder aktiviert werden.

Nachfolgend wird ein Ausführungsbeispiel einer erfindungsgemäßen Gasturbine anhand der beigefügten schematischen Zeichnung näher erläutert.

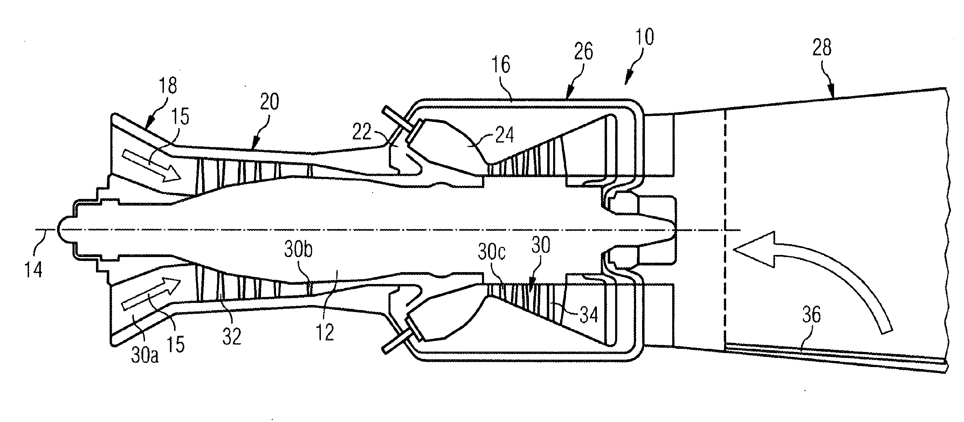

Die einzige Figur der Zeichnung zeigt eine Längsschnittansicht eines Ausführungsbeispiels einer erfindungsgemäßen Gasturbine.

In der Figur ist ein Ausführungsbeispiel einer erfindungsgemäßen Gasturbine 10 dargestellt. Die Gasturbine 10 weist einen Rotor 12 auf, welcher um eine Rotorachse 14 drehbar gelagert ist und von einem Turbinengehäuse 16 umgeben ist. Am gemäß der Figur links gelegenen Ende der Gasturbine 10 strömt ein Gas 15 in Form von Luft über einen ein Ansaughaus aufweisenden Einströmabschnitt 18 in einen sich daran anschließenden Verdichter 20 ein. Im Bereich des Verdichters 20 wird das von diesem angesaugte Gas 15 mittels Verdichterschaufeln 32 komprimiert. Daraufhin gelangt die verdichtete Luft als Gas 15 in eine Verbrennungseinrichtung 22, in welcher der verdichteten Luft während des Lastbetriebes ein Brennstoff zugesetzt wird. Das Luft-/Brennstoffgemisch wird dann in einer ringförmigen Brennkammer 24 entzündet. Dabei wird das Gemisch in die Form eines heißen Abgases umgesetzt.

Das entstehende heiße Abgas wird in einen Turbinenschaufelabschnitt 26 der Gasturbine 10 weitergeleitet, in dem es unter Expansion über entsprechende Turbinenschaufeln 34 den Rotor 12 antreibt. Daraufhin gelangt das Abgas in einen Abströmabschnitt 28 in Gestalt eines Abgaskanals und wird von dort in einen nicht zeichnerisch dargestellten nachgeschalteten Kessel geleitet. Die Gasturbine 10 weist damit einen Strömungskanal 30 zum Führen des Gases 15 auf, das zunächst in Form von Luft, daraufhin in Form eines Luft-/Brennstoffgemisches und schließlich in Form eines Abgases vorliegt. Der Strömungskanal 30 umfasst in der Figur von links nach rechts gehend einen Einströmabschnitt 30a des Strömungskanals 30, einen Verdichterabschnitt 30b des Strömungskanals 30 sowie einen Turbinenschaufelabschnitt 30c des Strömungskanals 30 und die Brennkammer 24.

Der Abströmabschnitt 28 ist mittels einer Sperreinrichtung 36 verschließbar. Die Sperreinrichtung 36 ist in Gestalt einer schwenkbaren Schließklappe ausgeführt. In der Figur ist die Sperreinrichtung 36 in geöffneter Stellung gezeigt. Weiterhin ist mit einer unterbrochenen Linie die geschlossene Stellung der Sperreinrichtung 36 angedeutet. In einer nicht zeichnerisch dargestellten Ausführungsform einer erfindungsgemäßen Gasturbine umfasst die Sperreinrichtung 36 zusätzlich oder alternativ zur Schließklappe im Abströmabschnitt 28 ein entsprechendes Sperrelement im Einströmabschnitt 18. Dieses Sperrelement dient zum zumindest teilweisen Verschließen des Einströmabschnitts 18.

Die Schließklappe im Abströmabschnitt und/oder weitere Sperrelemente werden nach Beendigung eines Lastbetriebs der Gasturbine 10, in dem der Rotor 12 von dem Gas 15 über den Turbinenschaufelabschnitt 26 angetrieben wird, verschlossen. Daraufhin wird im abgeschalteten Betriebszustand der Gasturbine 10 der Rotor 12 im Rahmen eines Turnbetriebs mit einer geringen Drehzahl von beispielsweise etwa 2 Hz mittels eines nicht dargestellten Hilfsmotors angetrieben. Damit wird verhindert, dass der Rotor 12 im abgeschalteten Betriebszustand verklemmt. Durch das Schließen der Sperreinrichtung 36 wird eine Konvektionskühlung von Bauteilen der Gasturbine 10 verhindert, welche sich aufgrund der ansonsten beim Turnbetrieb vom Verdichter 20 durchgepumpten Luftströmung einstellen würde. Darüber hinaus kann die mechanische Turnenergie sogar in Wärmeenergie umgewandelt werden, sodass die Gasturbine 10 bei Stillstand möglichst lange warm gehalten wird.

## Patentansprüche

1. Gasturbine (10) für ein thermisches Kraftwerk,
mit einem drehbaren Rotor (12) sowie einem Strömungskanal (30),
welcher von einem Gas (15) durchströmbar ist und in dem Turbinenschaufeln (34) zum Antreiben des Rotors (12) angeordnet sind und
mit einem Einströmabschnitt (18) zum Einströmen des Gases (15) in die Gasturbine (10) und einem Abströmabschnitt (28), durch welchen das Gas (15) nach Durchströmen des Bereichs mit den Turbinenschaufeln (34) aus der Gasturbine (10) abführbar ist,
wobei eine Sperreinrichtung (36), die in einer Schließstellung, zumindest teilweise verhindert, dass das Gas (15) den Strömungskanal (30) durchströmt,
**gekennzeichnet durch**
die Sperreinrichtung (36) in der Schließstellung den Einströmabschnitt (18) und/oder den Abströmabschnitt (28) zumindest teilweise verschließt.

2. Gasturbine (10) nach Anspruch 1,
**dadurch gekennzeichnet, dass**
die Sperreinrichtung (36) in der Schließstellung zumindest teilweise verhindert, dass das Gas (15) den Strömungskanal (30) im Bereich der Turbinenschaufeln (34) durchströmt.

3. Gasturbine (10) nach Anspruch 1 oder 2,
**dadurch gekennzeichnet, dass**
die Sperreinrichtung (36) ein in dem Einströmabschnitt (18) angeordnetes erstes Sperrelement und/oder ein in dem Abströmabschnitt (28) angeordnetes zweites Sperrelement (36) aufweist.

4. Gasturbine (10) nach Anspruch 1, 2 oder 3,
**gekennzeichnet durch**
eine stromabwärtsseitig bezüglich des Einströmabschnitts (18) angeordnete Brennkammer (24),
in der das Gas (15) aus einer sauerstoffreichen Form in eine abgasreiche Form umsetzbar ist,
wobei der Strömungskanal (30) **durch** die Brennkammer (24) verläuft.

5. Gasturbine (10) nach Anspruch 4,
**gekennzeichnet durch**
einen stromabwärtsseitig bezüglich des Einströmabschnitts (18) angeordneten und der Brennkammer (24) vorgeschalteten Verdichter (20) zum Verdichten des Gases (15) mittels Verdichterschaufeln (32),
wobei der Strömungskanal (30) **durch** den Verdichter (20) verläuft.

6. Verfahren zum Betreiben einer Gasturbine (10) für ein thermisches Kraftwerk, bei dem die Gasturbine (10) nach Beendigung eines Lastbetriebs, in dem ein Rotor (12) der Gasturbine (10) von einem Gas (15) über einen Turbinenschaufelabschnitt (26) der Gasturbine (10) angetrieben wird, in einen abgeschalteten Betriebszustand übergeht, in dem der Rotor (12) nicht mehr von dem Gas (15) angetrieben wird,
**dadurch gekennzeichnet, dass**
erst beim oder nach dem Übergang in den abgeschalteten Betriebszustand der Strömungskanal (30) mittels einer Sperreinrichtung (36) zumindest teilweise verschlossen wird.

7. Verfahren nach Anspruch 6,
**dadurch gekennzeichnet, dass**
die Durchströmung des Turbinenschaufelabschnittes (26) durch ein zumindest teilweises Verschließen eines Einströmabschnittes (18) der Gasturbine (10), durch welchen das Gas (15) im Lastbetrieb in die Gasturbine einströmt (10),
und/oder durch ein zumindest teilweises Verschließen eines Abströmabschnittes (28), durch welchen das Gas (15) im Lastbetrieb die Gasturbine (10) verlässt,
zumindest teilweise verhindert wird.

8. Verfahren nach Anspruch 6 oder 7,
**dadurch gekennzeichnet, dass**
im abgeschalteten Betriebszustand der Gasturbine (10) der Rotor (12) im Rahmen eines Turnbetriebs mit einer ein Verklemmen des Rotors (12) verhindernden geringen Drehzahl angetrieben wird.

## Claims

1. Gas turbine (10) for a thermal power plant,
with a rotatable rotor (12) and also a flow passage (30) which can be exposed to throughflow by a gas (15) and in which turbine blades (34) for driving the rotor (12) are arranged, and
with an inlet section (18) for inflow of the gas (15) into the gas turbine (10) and an exhaust section (28) through which the gas (15) can be discharged from the gas turbine (10) after flowing through the region with the turbine blades (34),
wherein a blocking device (36) in a closed position at least partially prevents the gas (15) flowing through the flow passage (30),
**characterized in that**
the blocking device (36) in the closed position at least partially closes off the inlet section (18) and/or the exhaust section (28).

2. Gas turbine (10) according to Claim 1,
**characterized in that**
the blocking device (36) in the closed position at least partially prevents the gas (15) from flowing through the flow passage (30) in the region of the turbine blades (34).

3. Gas turbine (10) according to either of Claims 1 or 2,
**characterized in that**
the blocking device (36) has a first blocking element which is arranged in the inlet section (18), and/or a second blocking element (36) which is arranged in the exhaust section (28).

4. Gas turbine (10) according to Claim 1, 2 or 3,
**characterized by**
a combustion chamber (24) which is arranged on the downstream side with regard to the inlet section (18),
in which the gas (15) can be converted from an oxygen-enriched form into an exhaust gas-enriched form,
wherein the flow passage (30) extends through the combustion chamber (24).

5. Gas turbine (10) according to Claim 4,
**characterized by**
a compressor (20) for compressing the gas (15) by means of compressor blades (32), which is arranged on the downstream side with regard to the inlet section (18) and connected upstream to the combustion chamber (24),
wherein the flow passage (30) extends through the compressor (20).

6. Method for operating a gas turbine (10) for a thermal power plant, in which the gas turbine (10), after completion of a load operation in which a rotor (12) of the gas turbine (10) is driven by a gas (15) via a turbine blade section (26) of the gas turbine (10), transfers into a deactivated operating state in which the rotor (12) is no longer driven by the gas (15),
**characterized in that**
the flow passage (30) is at least partially closed off by means of a blocking device (36) only during or after the transfer into the deactivated operating state.

7. Method according to Claim 6,
**characterized in that**
the exposure of the turbine blade section (26) to throughflow is at least partially prevented by means of an at least partial closing off of an inlet section (18) of the gas turbine (10), through which the gas (15) flows into the gas turbine (10) during the load operation, and/or by means of an at least partial closing off of an exhaust section (28) through which the gas (15) leaves the gas turbine (10) during the load operation.

8. Method according to either of Claims 6 or 7,
**characterized in that**
in the deactivated operating state of the gas turbine (10) the rotor (12), within the limits of a turning operation, is driven at a low speed which prevents a seizing of the rotor (12).

## Revendications

1. Turbine ( 10 ) à gaz pour une centrale thermique,
comprenant un rotor ( 12 ) tournant ainsi qu'un canal ( 30 ) d'écoulement,
qui peut être parcouru par un gaz ( 15 ) et dans lequel sont disposées des aubes ( 34 ) de turbine pour l'entraînement du rotor ( 12 ) et
comprenant une section ( 18 ) d'admission pour l'admission du gaz ( 15 ) dans la turbine ( 10 ) à gaz et une section ( 28 ) d'évacuation, par laquelle le gaz ( 15 ) peut, après avoir passé la partie ayant les aubes ( 34 ) de turbine, être évacué de la turbine ( 10 ) à gaz,
dans laquelle un dispositif ( 36 ) d'obturation empêche, au moins en partie, dans une position de fermeture, que le gaz ( 15 ) passe dans le canal ( 30 ) d'écoulement,
**caractérisée en ce que** le dispositif ( 36 ) d'obturation ferme, dans la position de fermeture au moins en partie, la section ( 18 ) d'admission et/ou la section ( 28 ) d'évacuation.

2. Turbine ( 10 ) à gaz suivant la revendication 1,
**caractérisée en ce que**
le dispositif ( 36 ) d'obturation empêche, en la position de fermeture, au moins en partie, que le gaz ( 15 ) passe dans le canal ( 30 ) d'écoulement dans la partie des aubes ( 34 ) de turbine.

3. Turbine ( 10 ) à gaz suivant la revendication 1 ou 2,
**caractérisée en ce que**
le dispositif ( 36 ) d'obturation a un premier élément d'obturation disposé dans la section ( 18 ) d'admission et/ou un deuxième élément ( 36 ) d'obturation disposé dans la section ( 28 ) d'évacuation.

4. Turbine ( 10 ) à gaz suivant la revendication 1, 2 ou 3,
**caractérisée par**
une chambre de combustion ( 24 ) disposée en aval de la section ( 18 ) d'admission,
chambre dans laquelle le gaz peut être transformé d'une forme riche en oxygène en une forme riche en gaz d'échappement,
dans laquelle le canal ( 30 ) d'écoulement passe dans la chambre de combustion ( 24 ).

5. Turbine ( 10 ) à gaz suivant la revendication 4,
**caractérisée par**
un compresseur ( 20 ) disposé en aval de la section ( 18 ) d'admission et en amont de la chambre de combustion ( 24 ) en vue de comprimer le gaz ( 15 ) au moyen d'aubes de compresseur,
dans laquelle le canal ( 30 ) d'écoulement passe dans le compresseur ( 20 ).

6. Procédé pour faire fonctionner une turbine ( 10 ) à gaz d'une centrale thermique, dans lequel on fait passer la turbine ( 10 ) à gaz après achèvement d'un fonctionnement en charge, dans lequel un rotor ( 12 ) de la turbine ( 10 ) à gaz est entraîné par un gaz ( 15 ) par l'intermédiaire d'une section ( 26 ) d'aubes de turbine de la turbine ( 10 ) à gaz, dans un état de fonctionnement à l'arrêt, dans lequel le rotor ( 12 ) n'est plus entraîné par le gaz ( 15 ),
**caractérisé en ce que**
on ne ferme, au moins en partie, le canal ( 30 ) d'écoulement au moyen d'un dispositif ( 36 ) d'obturation que lors du passage à l'état de fonctionnement à l'arrêt ou après ce passage.

7. Procédé suivant la revendication 6,
**caractérisé en ce que**
on empêche, au moins en partie, de passer dans la section ( 26 ) d'aubes de turbine par une fermeture, au moins en partie, d'une section ( 18 ) d'admission de la turbine ( 10 ) à gaz,
par laquelle le gaz ( 15 ) entre dans la turbine ( 10 ) à gaz en fonctionnement en charge,
et/ou par une fermeture, au moins en partie, d'une section ( 28 ) d'évacuation, par laquelle le gaz ( 15 ) quitte la turbine ( 10 ) à gaz en fonctionnement en charge.

8. Procédé suivant la revendication 6 ou 7,
**caractérisé en ce que**
à l'état de fonctionnement à l'arrêt de la turbine ( 10 ) à gaz, on entraîne le rotor ( 12 ) dans le cas d'un fonctionnement fou à une vitesse de rotation plus petite empêchant un blocage du rotor ( 12 ).
